# EUROPÄISCHE PATENTANMELDUNG

(11) **EP 0 981 139 A1**
(43) Veröffentlichungstag der Anmeldung: **23.02.2000**
(21) Anmeldenummer: 99114035.1
(22) Anmeldetag: 20.07.1999
(51) Int. Cl.: H01F 27/28, H02K 3/14, H01B 9/00

(54) **Elektrischer Leiter**

(30) Priorität: 20.08.1998 AT 142198
(71) Anmelder: ASTA Elektrodraht GmbH, A-2755 Oed/Bez. Wiener Neustadt (AT)
(72) Erfinder: Ponweiser, Johann, 2822 Erlach (AT); Breuer, Peter, 2763 Neusiedl/Pernitz (AT)
(74) Vertreter: Rieberer, Stefan, Dipl.-Ing.

(57) **Zusammenfassung**

Gezeigt werden ein elektrischer Leiter mit im Wesentlichen mehreckigen Querschnitt und mit ausschließlich abgerundeten Kanten zur Verwendung in elektrischen Wicklungen, sowie daraus hergestellte Mehrfachparallelleiter, Drillleiter und elektrische Wicklungen und ein Verfahren zur Konstruktion von elektrischen Wicklungen, wobei bei dem Leiter (6) zur lokalen Verringerung der elektrischen Feldstärke die Abrundung zumindest einer Kante (11) einen größeren mittleren Krümmungsradius aufweist als jene einer anderen Kante (12). Durch die Vergrößerung des mittleren Krümmungsradius der Abrundung an jenen Kanten (11), an denen beim Einbau des Leiters (6) in eine elektrische Einrichtung erhöhte elektrische Feldstärken zu erwarten sind, werden diese verringert und folglich kann der Isolationsauftrag am Leiter (6) niedrig gehalten werden und durch die Verkleinerung der Krümmungsradien der Abrundungen der übrigen Kanten (12), an denen beim Einbau in eine elektrische Einrichtung keine erhöhten elektrischen Feldstärken zu erwarten sind, wird die Auflagefläche zur Übertragung von Axialkräften nicht verringert.

## Beschreibung

Die Erfindung betrifft einen elektrischer Leiter mit im Wesentlichen mehreckigem Querschnitt und mit ausschließlich abgerundeten Kanten zur Verwendung in elektrischen Wicklungen, sowie daraus hergestellte Mehrfachparallelleiter, Drillleiter und elektrische Wicklungen und ein Verfahren zur Konstruktion von elektrischen Wicklungen.

Aus dem Stand der Technik sind Leiter mit abgerundeten Kanten bekannt. So zeigt der Abstract der JP 60-182 704 A einen Flachleiter mit im Wesentlichen rechteckigem Querschnitt, wobei alle Kanten abgerundet ausgeführt sind. Der Krümmungsradius der vier Kanten ist gleich groß.

Die WO 97/50280 A1 zeigt Leiterbahnen einer integrierten Schaltung, wobei eine Leiterbahn zwei abgerundete und zwei nicht abgerundeten Kanten besitzt.

Die EP 545 370 A1 zeigt einen Leiterquerschnitt, der eine Abrundung bzw. Krümmung zweier gegenüberliegender Seitenflächen, jedoch keine Abrundung von allen Kanten aufweist, wobei beim Übergang zum anderen Paar Seitenflächen jeweils ein Knick auftritt, was eine negative Auswirkung auf die Spannungsfestigkeit des Leiters hat.

Die DE 613 780 C offenbart eine Flachleiterwicklung, bei der alle inneren Leiter vier Kanten besitzen und die beiden äußeren Leiter durch jeweils einen Halbzylinder gebildet werden, was den Nachteil hat, dass die Auflagefläche für die Übertragung von Axialkräften nicht groß genug ist, da hier infolge der halbrunden Ausführung des Leiterquerschnitts keine ebene Auflagefläche entsteht.

Besonders die Leiter, die die Wicklung von Transformatoren bilden, auch Wicklungsleiter genannt, sind im Kurzschlussfall des Transformators, jedoch auch während der Herstellungsphase vielfältigen mechanischen Beanspruchungen ausgesetzt und daher entsprechend auszuführen. Die geometrische Ausbildung der Querschnitte der Leiter hat weiters der inneren (zwischen den Wicklungsleitem einer Wicklung) und der äußeren (zwischen Wicklungen) elektrischen Spannungsfestigkeit der Wicklungen und andererseits der Optimierung des Wirkungsgrades des Transformators zu genügen.

Die mechanischen Beanspruchungen resultieren vor allem aus den dynamischen Kraftwirkungen im Kurzschlussfall des Transformators, die durch die stromführenden Leiter im magnetischen Wicklungsstreufeld verursacht werden. Dabei werden z.B. im Fall von Core-Type-Transformatoren die Leiter durch die bezüglich der Wicklungsachse wirkenden Radialkräfte, verursacht durch die Axialkomponenten des magnetischen Wicklungsstreufeldes, tangential auf Zug und Druck und durch die Axialkräfte, verursacht durch die Radialkomponenten des Wicklungsstreufeldes, die vor allem an den Enden der Wicklung auftreten, auf Druck gegenüber ihren axialen Auflagern beansprucht.

Im Fall der Axialkräfte superponieren sich die einzelnen axialen Kraftwirkungen der Wicklungsleiter bzw. der aus den Wicklungsleitem gewickelten Spulen innerhalb ihrer Einspannkonstruktion und können große spezifische Drücke auf die, in axialer Richtung gesehen, an bzw. zwischen den Wicklungsleitern angeordneten Isolierteile ausüben. Ähnlich große Axialkräfte werden meist statisch auch im Zuge der Herstellung der Wicklung während des mechanischen Stabilisierungsprozesses an der fertigen Wicklung aufgebracht. Da die Wirkung von den dynamisch auftretenden Axialkräften vor allem in der Anfangsphase des Kurzschlussvorganges direkt proportional dem Quotienten aus Kraft und Auflagefläche des Leiters ist, wird zur Reduzierung des spezifischen Drucks eine möglichst große ebene Leiterfläche senkrecht zur axialen Wicklungsachse angestrebt.

Die innere elektrische Spannungsbeanspruchung resultiert einerseits aus der elektrischen Spannungsbeaufschlagung - stationär meist bei der höchsten induzierten Spannung während der Abnahmeprüfung, transient meist beim höchsten Pegel der Stoßspannungsprüfung mit voller oder abgeschnittener Welle - und andererseites von der spezifischen Wicklungsschaltung, der isolationstechnischen Gestaltung und Bemessung im Allgemeinen und in hohem Maße, vor allem für Stoßspannungsbeanspruchungen, von den Kantenradien des Wicklungsleiters und der darüber aufgebrachten Leiterisolierung, wie Papier. Besonders bei kurzen Spannungsbeanspruchungen im Millisekundenbereich kommt für die Höhe der örtlichen elektrischen Spannungsfestigkeit der elektrischen Feldstärke und damit dem Kantenradius des Wicklungsleiters eine entscheidende Bedeutung zu. Ein Wicklungsleiter kann nun ein Einzelleiter oder ein Mehrfachleiter, der aus Einzelleitern besteht, sein.

Die Größe des Krümmungsradius der Kanten des Einzelleiters mit Rechteckquerschnitt wird normgemäß durch die kleinste radiale (in Bezug zur Wicklungsachse) Leiterabmessung, die Leiterdicke, bestimmt. Beispielsweise wird bei Leitern mit einer Nenndicke von 1 bis 1,6 mm ein Kantenradius von 0,5 mm oder bei Leitern mit einer Nenndicke von mehr als 9 mm ein Kantenradius von 1,6 mm vorgegeben. Dabei wird von gleich großen Kreisradien für alle vier Kanten eines Rechteckleiters ausgegangen und darauf Bedacht genommen, dass eine genügend große Auflagefläche für die Übertragung der Axialkräfte mit vertretbarem spezifischen Flächendruck auf die Isolierteile vorhanden bleibt.

Die Bestrebungen, den Wirkungsgrad von Transformatoren zu erhöhen, hat zu immer feinerer Leiterunterteilung in radialer Richtung und - in den axialen Endbereichen der Wicklungen - in axialer Richtung geführt. Durch die feinere Unterteilung in radialer Richtung kommen nun auch in Mittel- und Hochspannungswicklungen von leistungsstarken Transformatoren Mehrfachleiter, also Zwillings-, Drillings- oder Vierfachleiter zum Einsatz, besonders für den Typ der elektrisch verschachtelten Wicklung. Dadurch gelangen in bezüglich der Spannungsbeanspruchung sensiblen Bereichen von Transformatorenwicklungen Leiter mit kleinsten Kantenradien und damit erhöhter elektrischer Feldstärke zum Einsatz, sodass zur Erzielung gleicher elektrischer Spannungsfestigkeit, verglichen mit Wicklungen mit gröberer Leiterunterteilung, der Leiterisolationauftrag erhöht werden muss. Dies hat den Nachteil, dass es neben erhöhtem Aufwand an Isolationsmaterial aufgrund der Vergrößerung des Abstands zwischen den Wicklungsleitern einer Wicklung zu einer Verringerung des Füllfaktors und zu einer niedrigeren kapazitiven Kopplung kommt. Zudem verringert eine dickere Isolierung, beispielsweise aus Papier, die Stabilität der Wicklung bezüglich der mechanischen Beanspruchungen.

Die Aufgabe der vorliegenden Erfindung besteht nun darin, in der Überwindung der genannten Nachteile mehreckige Leiter, insbesondere zur Verwendung als Wicklungsleiter, so zu gestalten, dass die Leiterisolierung möglichst dünn ausgeführt wird, jedoch die notwendige elektrische Spannungsfestigkeit gegeben ist.

Die Erfindung ist dadurch gekennzeichnet, dass zur lokalen Verringerung der elektrischen Feldstärke die Abrundung zumindest einer Kante einen größeren mittleren Krümmungsradius aufweist als jene einer anderen Kante.

Neu an dieser Erfindung ist, dass ausgehend von einem Leiter mit gleichen Kantenabrundungen durch die Vergrößerung des mittleren Krümmungsradius der Abrundung an jenen Kanten, an denen beim Einbau des Leiters in eine elektrische Einrichtung erhöhte elektrische Feldstärken zu erwarten sind, diese verringert werden und folglich der Isolationsauftrag am Leiter niedrig gehalten werden kann und durch die Verkleinerung der Krümmungsradien der Abrundungen der übrigen Kanten, an denen beim Einbau in eine elektrische Einrichtung keine erhöhten elektrischen Feldstärken zu erwarten sind, die Auflagefläche zur Übertragung der Axialkräfte nicht verringert wird.

Eine Ausgestaltung der Erfindung besteht darin, dass der Querschnitt der Kantenabrundung mit größerem mittleren Krümmungsradius kreisförmig ist. Diese Ausführung der Kantenabrundung ist mit geringem Aufwand herzustellen.

Eine alternative Ausgestaltung der Erfindung besteht darin, dass der Querschnitt der Kantenabrundung mit größerem mittleren Krümmungsradius von der Kreisform abweicht. Dadurch kann die Seitenlänge der Querschnittsfläche des Leiters den geometrischen Anforderungen angepasst werden. Beispielsweise kann erreicht werden, dass die ebenen Leiterflächen durch die Abrundung bezüglich des vollen Querschnitts in verschiedenem Maß verkleinert werden, sodass jene Leiterfläche, die als Auflagefläche dient, durch das Abrunden in geringerem Maß verkleinert werden als die andere an die Kante anschließende Fläche.

Weiters ist es von Vorteil, dass der Leiter einen im Wesentlichen rechteckigen Querschnitt sowie eine Isolierung, insbesondere eine Lack- oder Papierisolierung, aufweist. Dadurch kann der Leiter beispielsweise in elektrischen Wicklungen, insbesondere im Transformatorenbau, eingesetzt werden.

Der Leiter ist weiters dadurch gekennzeichnet, dass der größere mittlere Krümmungsradius der Abrundung einer Kante zu einem kleineren Krümmungsradius der Abrundung einer anderen Kante desselben Leiters ein Verhältnis von 1,1 bis 10, insbesondere 1,2 bis 6, aufweist. Dadurch wird unter Berücksichtigung der geometrischen Anforderungen eine ausreichende Verringerung der lokalen elektrischen Feldstärke erreicht.

Es ist weiters von Vorteil, dass die Krümmung der Kantenabrundung mit größerem mittleren Krümmungsradius an der kurzen Seite des Rechteckquerschnitts größer ist als an dessen Längsseite. Dadurch steht an der kurzen Seite, die der Aufnahme für Axialkräfte dient, im Vergleich zu einem konstanten Krümmungsradius, der etwa dem mittleren Krümmungsradius entspricht, eine größere ebene Auflagefläche zur Verfügung.

Die Erfindung wird vorteilhaft auch auf Mehrfachparallelleiter zur Verwendung in elektrischen Wicklungen, welcher aus mehreren nebeneinander und/oder übereinander angeordneten, vorzugsweise elektrisch isolierten Leitern mit im Wesentlichen rechteckigem Querschnitt und mit ausschließlich abgerundeten Kanten aufgebaut ist, angewendet, wobei die Abrundung zumindest einer Kante eines einzelnen Leiters, die eine Außenkante des Mehrfachleiters bildet, einen größeren mittleren Krümmungsradius aufweist als jene einer anderen Kante dieses Leiters.

Ebenso wird die Erfindung auf Drillleiter zur Verwendung in elektrischen Wicklungen, wobei der Drillleiter aus mehreren vorzugsweise elektrisch isolierten Leitern mit im Wesentlichen rechteckigem Querschnitt und mit ausschließlich abgerundeten Kanten aufgebaut ist, angewendet, wobei zumindest die Abrundung einer Kante jedes einzelnen Leiters einen größeren mittleren Krümmungsradius aufweist als eine andere Kante dieses Leiters. Dadurch wird erreicht, dass zumindest eine Außenkante des Drillleiters einen größeren mittleren Krümmungsradius aufweist als die übrigen Außenkanten.

Schließlich umfasst die Erfindung auch eine elektrische Wicklung, die aus einem oder mehreren Wicklungsleitern besteht, welcher aus mehreren vorzugsweise elektrisch isolierten Leitern mit im Wesentlichen rechteckigem Querschnitt und mit ausschließlich abgerundeten Kanten aufgebaut ist. Hier wird die Abrundung zumindest einer Außenkante durch eine Kante eines einzelnen Leiters, die einen größeren mittleren Krümmungsradius aufweist als eine andere Kante dieses Leiters, gebildet. Dadurch ist gewährleistet, dass die an den Kanten zwischen den Wicklungsleitem und am Rand der Wicklung auftretenden hohen elektrischen Felder verringert werden.

Es ist im Besonderen bei Einfach- und Mehrfachleitem vorgesehen, dass die Äbrundung zweier Kanten, die vorzugsweise an die gleiche Längsseite des Rechteckquerschnitts anschließen, jedes einzelnen Leiters einen größeren mittleren Krümmungsradius aufweist als jene der beiden anderen Kanten des Leiters. Auf diese Weise erhält beispielsweise der Drillleiter zwei Außenkanten mit stärkerer Abrundung.

Die erfindungsgemäße Ausführung der elektrischen Wicklungen eines Transformators erlaubt die Überwindung der eingangs genannten Nachteile.

Eine Ausführungsform eines Transformators besteht darin, dass die der jeweils anderen Wicklung zugewandte Oberfläche der Wicklung Leiter aufweist, die an der Oberfläche der Wicklung zumindest eine Abrundung mit größerem mittlerem Krümmungsradius im Vergleich zu anderen Kanten dieses Leiters besitzen. Dadurch wird örtlich die elektrische Feldstärke zwischen Primär- und Sekundärwicklung des Transformators reduziert.

Das Verfahren zur Konstruktion von elektrischen Wicklungen, insbesondere für Transformatoren, wobei die Wicklung aus einem oder mehreren Wicklungsleitem besteht, welcher aus mehreren vorzugsweise elektrisch isolierten Leitern mit im Wesentlichen rechteckigem Querschnitt und mit ausschließlich abgerundeten Kanten aufgebaut ist, ist dadurch gekennzeichnet, dass die in der Wicklung und um die Wicklung auftretenden elektrischen Feldstärken berechnet werden und bei Überschreiten einer vorgegebenen lokalen elektrischen Feldstärke an einer Kante eines Wicklungsleiters bzw. eines einzelnen Leiters der mittlere Krümmungsradius der Abrundung der betreffenden Kante des Leiters verändert wird.

Dadurch kann die elektrische Wicklung hinsichtlich der elektrischen Spannungsfestigkeit optimiert werden.

Die Erfindung wird anhand der Figuren 1 bis 11 näher erläutert.
Fig. 1 zeigt einen Teil eines Längsschnitts durch einen Transformator gemäß dem Stand der Technik.
Fig. 2 zeigt eine Vergrößerung von Fig. 1.
Fig. 3 zeigt einen Stromleiter mit zwei erfindungsgemäß abgerundeten Kanten.
Fig. 4 zeigt einen erfindungsgemäßen Zwillingsleiter.
Fig. 5 zeigt einen erfindungsgemäßen Drillingsleiter.
Fig. 6 zeigt einen erfindungsgemäßen Vierfachleiter.
Fig. 7 zeigt einen erfindungsgemäßen Drillleiter.
Fig. 8 zeigt einen Stromleiter mit einer erfindungsgemäß abgerundeten Kante.
Fig. 9 zeigt einen erfindungsgemäßen Vierfachleiter aus zwei Zwillingsleitern.
Fig. 10 zeigt einen erfindungsgemäßen Sechsfachleiter aus zwei Drillingsleitern.
Fig. 11 zeigt eine abgerundete Kante eines Stromleiters, bei der die Abrundung von der Kreisform abweicht.

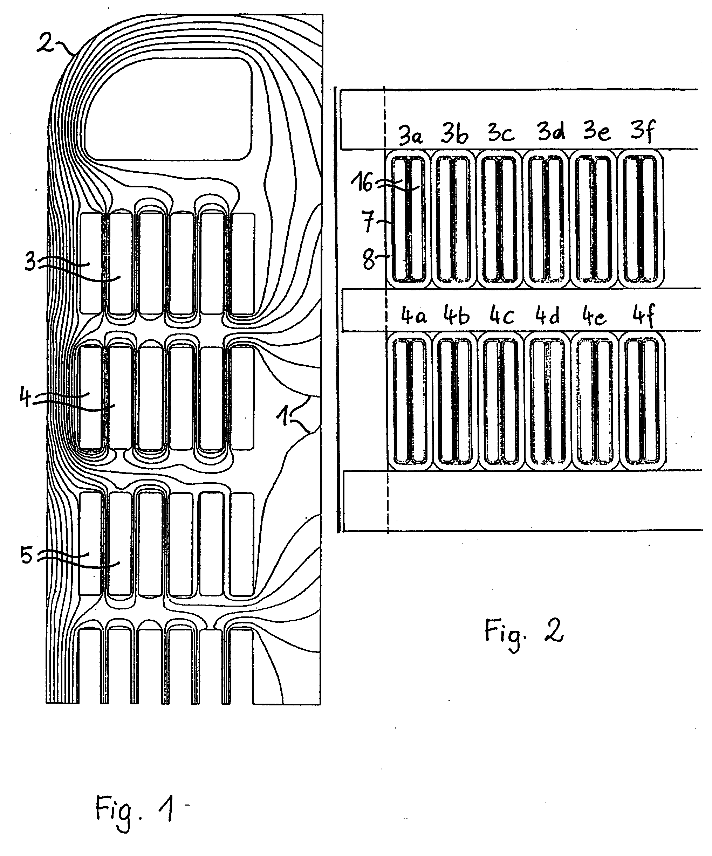

In Fig. 1 ist das elektrische Feld durch Äquipotentiallinien 1 in einem gemäß dem Stand der Technik aufgebauten Transformator 2 zwischen den einzelnen Wicklungsleitern 3, 4, 5, die alle zu einer Wicklung gehören und deren genaue Bezeichnung aus Fig. 2 zu entnehmen ist, dargestellt. Im Bereich der Kanten der Wicklungsleiter, insbesondere 3a-f und 4a-f, herrschen hohe Feldstärken. An der linken unteren Kante des Wicklungsleiters 4a liegt im Vergleich zu den übrigen Wicklungsleitem eine besonders große elektrische Feldstärke vor. Die hohen Feldstärken zwischen den Leitern in radialer Richtung sind weniger kritisch, da hier im Allgemeinen nur Papier - ohne Öl - als Isolation angebracht ist und dies eine bessere Isolationswirkung zeigt.

Fig. 2 zeigt, dass der Transformator aus Fig. 1 Wicklungsleiter 3a-f, 4a-f, aufweist, die als Zwillingsleiter ausgebildet sind. Die Einzelleiter 16 weisen gemäß dem Stand der Technik eine Beschichtung 7 auf und sind von einer Isolierung 8, z.B. Papier, umgeben. Alle Kanten der Einzelleiter 16 weisen die gleiche Krümmung auf.

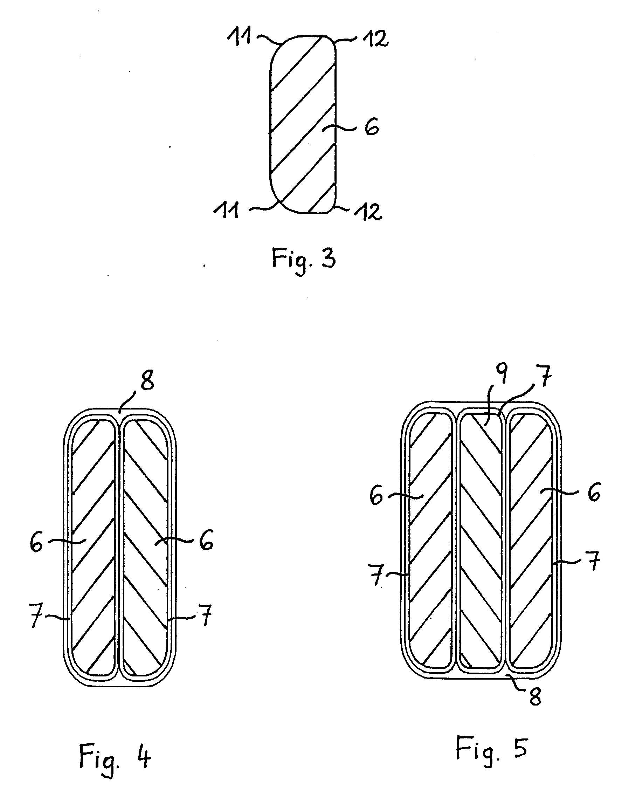

Um nun die hohen lokalen Feldstärken an den Kanten der Wicklungsleiter 3, 4, 5 zu verringern, werden gemäß Fig. 3 die Einzelleiter 6 an zwei Kanten 11 der gleichen Längsseite des Leiterquerschnitts stärker abgerundet als an den übrigen beiden Kanten 12.

In Fig. 4 werden zwei dieser Einzelleiter 6 zu einem Zwillingsleiter zusammengesetzt, wobei die Einzelleiter 6 jeweils eine Beschichtung 7 aufweisen und durch eine gemeinsame Isolierung 8 verbunden sind.

In Fig. 5 werden zwei Einzelleiter 6 und ein Einzelleiter 9, der vier Kanten mit gleicher Krümmung besitzt, wobei diese der Krümmung 12 in Fig. 3 entspricht, zu einem Drillingsleiter zusammengesetzt. Die Einzelleiter 6, 9 weisen jeweils eine Beschichtung 7 auf und sind durch eine gemeinsame Isolierung 8 verbunden.

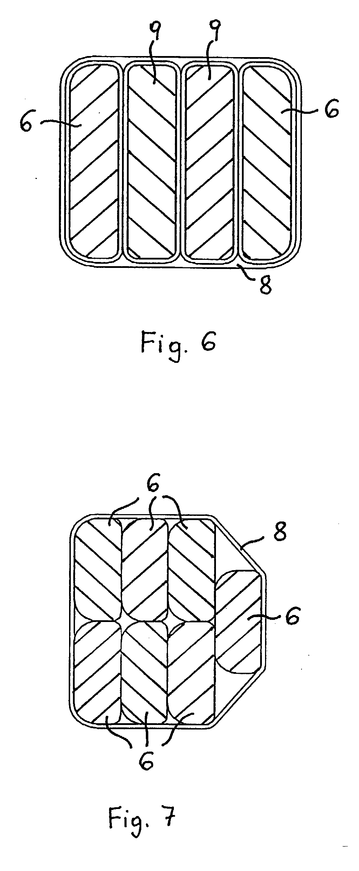

Analog sind in Fig. 6 zwei beschichtete Einzelleiter 6 und zwei beschichtete Einzelleiter 9 in einer gemeinsamen Isolierung 8 zu einem Vierfachleiter zusammengesetzt.

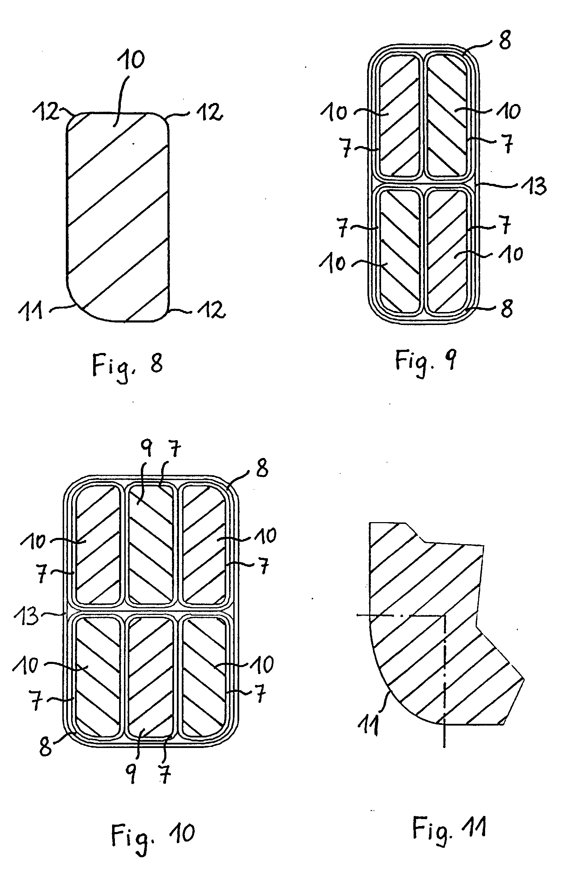

Ebenso können Einzelleiter 6 zur Bildung eines Drillleiters nach Fig. 7 herangezogen werden. Dabei wechseln die Einzelleiter 6 entlang der Längsachse des Drillleiters innerhalb der Isolierung 8 ihre Plätze im Leiterquerschnitt.

Eine andere Möglichkeit zur Bildung von Mehrfachleitern ist durch einen Einzelleiter 10 nach Fig. 8 gegeben. Dieser besitzt nur eine stärker abgerundete Kante 11 und drei normal ausgebildete Kanten 12.

In Fig. 9 werden vier dieser Einzelleiter 10 zu einem Vierfachleiter in der Form eines doppelten Zwillingsleiters zusammengestellt. Je zwei nebeneinander angeordnete, mit einer Beschichtung 7 versehene Leiter sind mit einer Isolierung 8 zu einem Zwillingsleiter zusammengefasst, die beiden Zwillingsleiter sind übereinander angeordnet und mit einer Isolierung 13 zum Vierfachleiter zusammengefasst. Hier weisen nur die vier Außenkanten des Vierfachleiters eine größere Krümmung als die übrigen Kanten der Einzelleiter 10 auf.

In Fig. 10 sind vier der mit einer Beschichtung 7 versehenen Einzelleiter 10 und zwei der mit einer Beschichtung 7 versehenen Einzelleiter 9 zu einem Sechsfachleiter in der Form eines doppelten Drillingsleiters zusammengestellt, wobei die Drillingsleiter jeweils von einer Isolierung 8 umgeben sind und durch eine Isolierung 13 zum Sechsfachleiter vereinigt sind. Auch hier weisen nur die vier Außenkanten stärker abgerundete Kanten auf, während die übrigen Kanten nach dem Stand der Technik ausgebildet sind.

In Fig. 11 ist eine erfindungsgemäß abgerundete Kante 11 dargestellt, die im Querschnitt einen von der Kreisform abweichenden Verlauf der Abrundung aufweist, der elliptisch, parabelförmig oder durch eine Aneinanderreihung von Kreisbögen gebildet sein kann. Dabei ist der Krümmungsradius am linken oberen Kantenende größer als am rechten unteren Kantenende. Das rechte untere Kantenende geht in die kurze Seite des Rechteckquerschnitts über, der als Auflagefläche für die Übertragung der Axialkräfte dient.

## Patentansprüche

1. Elektrischer Leiter mit im Wesentlichen mehreckigem Querschnitt und mit ausschließlich abgerundeten Kanten zur Verwendung in elektrischen Wicklungen, **dadurch gekennzeichnet, dass** zur lokalen Verringerung der elektrischen Feldstärke die Abrundung zumindest einer Kante (11) einen größeren mittleren Krümmungsradius aufweist als jene einer anderen Kante (12).

2. Elektrischer Leiter nach Anspruch 1, **dadurch gekennzeichnet, dass** der Querschnitt der Kantenabrundung (11) mit größerem mittleren Krümmungsradius kreisförmig ist.

3. Elektrischer Leiter nach Anspruch 1, **dadurch gekennzeichnet, dass** der Querschnitt der Kantenabrundung (11) mit größerem mittleren Krümmungsradius von der Kreisform abweicht.

4. Elektrischer Leiter nach einem der Ansprüche 1 bis 3, **dadurch gekennzeichnet, dass** der Leiter einen im Wesentlichen rechteckigen Querschnitt (6, 10) aufweist.

5. Elektrischer Leiter nach einem der Ansprüche 1 bis 4, **dadurch gekennzeichnet, dass** der Leiter eine Isolierung (7), insbesondere eine Lack- oder Papierisolierung, aufweist.

6. Elektrischer Leiter nach einem der Ansprüche 1 bis 5, **dadurch gekennzeichnet, dass** der größere mittlere Krümmungsradius der Abrundung einer Kante (11) zu einem kleineren Krümmungsradius der Abrundung einer anderen Kante (12) desselben Leiters (6, 10) ein Verhältnis von 1,1 bis 10, insbesondere 1,2 bis 6, aufweist.

7. Elektrischer Leiter nach einem der Ansprüche 4 bis 6, **dadurch gekennzeichnet, dass** die Krümmung der Kantenabrundung (11) mit größerem mittleren Krümmungsradius an der kurzen Seite des Rechteckquerschnitts größer ist als an dessen Längsseite.

8. Mehrfachparallelleiter zur Verwendung in elektrischen Wicklungen, welcher aus mehreren nebeneinander und/oder übereinander angeordneten, vorzugsweise elektrisch isolierten Leitern mit im Wesentlichen rechteckigem Querschnitt und mit ausschließlich abgerundeten Kanten aufgebaut ist, **dadurch gekennzeichnet, dass** die Abrundung zumindest einer Kante (11) eines einzelnen Leiters (6, 10), die eine Außenkante des Mehrfachleiters bildet, einen größeren mittleren Krümmungsradius aufweist als jene einer anderen Kante (12) dieses Leiters (6, 10).

9. Drillleiter zur Verwendung in elektrischen Wicklungen, welcher aus mehreren vorzugsweise elektrisch isolierten Leitern mit im Wesentlichen rechteckigem Querschnitt und mit ausschließlich abgerundeten Kanten aufgebaut ist, **dadurch gekennzeichnet, dass** zumindest die Abrundung einer Kante (11) jedes einzelnen Leiters (6, 10) einen größeren mittleren Krümmungsradius aufweist als eine andere Kante (12) dieses Leiters (6, 10).

10. Drillleiter nach Anspruch 9, **dadurch gekennzeichnet, dass** die Abrundung zweier Kanten (11), die vorzugsweise an die gleiche Längsseite des Rechteckquerschnitts anschließen, jedes einzelnen Leiters (6) einen größeren mittleren Krümmungsradius aufweist als jene der beiden anderen Kanten (12) des Leiters (6).

11. Elektrische Wicklung, die aus einem oder mehreren Wicklungsleitern besteht, welcher aus mehreren vorzugsweise elektrisch isolierten Leitern mit im Wesentlichen rechteckigem Querschnitt und mit ausschließlich abgerundeten Kanten aufgebaut ist, **dadurch gekennzeichnet, dass** die Abrundung zumindest einer Außenkante durch eine Kante (11) eines einzelnen Leiters (6, 10), die einen größeren mittleren Krümmungsradius aufweist als eine andere Kante (12) dieses Leiters (6, 10), gebildet wird.

12. Transformator, **dadurch gekennzeichnet, dass** dessen elektrische Wicklungen zumindest teilweise entsprechend Anspruch 11 ausgebildet sind.

13. Transformator nach Anspruch 12, **dadurch gekennzeichnet, dass** die der jeweils anderen Wicklung zugewandte Oberfläche der Wicklung Leiter (6, 10) aufweist, die an der Oberfläche der Wicklung zumindest eine Abrundung (11) mit größerem mittlerem Krümmungsradius im Vergleich zu anderen Kanten (12) dieses Leiters (6, 10) besitzen.

14. Verfahren zur Konstruktion von elektrischen Wicklungen, insbesondere für Transformatoren, wobei die Wicklung aus einem oder mehreren Wicklungsleitern besteht, welcher aus mehreren vorzugsweise elektrisch isolierten Leitern mit im Wesentlichen rechteckigem Querschnitt und mit ausschließlich abgerundeten Kanten aufgebaut ist, **dadurch gekennzeichnet, dass** die in der Wicklung und um die Wicklung auftretenden elektrischen Feldstärken berechnet werden und bei Überschreiten einer vorgegebenen lokalen elektrischen Feldstärke an einer Kante eines Wicklungsleiters bzw. eines einzelnen Leiters der mittlere Krümmungsradius der Abrundung der betreffenden Kante des Leiters verändert wird.
